# EUROPÄISCHE PATENTANMELDUNG

(11) **EP 4 071 062 A1**
(43) Veröffentlichungstag der Anmeldung: **12.10.2022**
(21) Anmeldenummer: 22450001.7
(22) Anmeldetag: 01.04.2022
(51) Int. Cl.: B65B 35/24, B65B 35/44, B65G 19/02, B65G 19/24, B65G 19/26

(54) **ZUFÜHRVORRICHTUNG FÜR SCHLAUCHBEUTELMASCHINE**

(30) Priorität: 07.04.2021 AT 3821 U
(71) Anmelder: Fuchs, Jürgen, 2440 Reisenberg (AT)
(72) Erfinder: Fuchs, Jürgen, 2440 Reisenberg (AT)
(74) Vertreter: Rippel, Andreas O.

(57) **Zusammenfassung**

Eine Zuführvorrichtung (1) für eine Schlauchbeutelmaschine weist mehrere mit einer Antriebskette (3) austauschbar verbundene Mitnehmer (4) auf. Diese Mitnehmer (4) schieben die zu verpackenden Gegenstände (6) in Pfeilrichtung p" an das Ende der Zuführvorrichtung (1) über die Verpackungsfolie (7).

Die Mitnehmer (4) sind in ihrem seitlichen Bereich mit der Antriebskette (3) verbunden. Die Mitnehmer (4) werden in einer Nut (8) geführt.

## Beschreibung

Die Erfindung betrifft eine Zuführvorrichtung für eine Schlauchbeutelmaschine mit einer Mehrzahl von mit einer Antriebskette verbundenen Mitnehmer für die zu verpackenden Gegenstände.

Horizontale Schlauchbetelmaschinen eignen sich zur schnellen Verpackung einzelner oder in Gruppen horizontal transportierbarer stückiger Produkte, wie z. B. Müsliriegel, Feuchttuchstapel, Trockenwürste, Bleistifte oder Spülmaschinentabs. Die Schlauchbeutelmaschinen führen mehrere Grundfunktionen und teilweise optionale Zusatzfunktionen aus, um ein Produkt in Folie zu verpacken. Das zu verpackende Gut wird auf einer Zuführvorrichtung (beispielsweise auf einem Transportband oder einer Mitnehmerkette) zur Bearbeitungseinheit für das Schweißen zugeführt. Diese Bearbeitungseinheit kann eine Stapeleinheit vorgeschaltet sein, in der eine eingestellte Anzahl von Produkten abgezählt, gestapelt und mit dem nächsten Taktschritt vorwärts transportiert wird. Im Zulauf der Schweißeinheit wird das Produkt mit der Folie umschlossen, die in der Folge verschweißt wird.

Diese bekannten Schlauchbeutelmaschinen bieten eine Reihe von Vorteilen. Wesentlich ist der geringe Platzverbrauch in der Produktionshalle gegenüber konventionellen Verpackungseinrichtungen. Hinzu kommt die Flexibilität durch die gute Umrüstbarkeit und ist eine schnelle Anpassung an die Produktbreite möglich. Das Verpacken von stoßgeschützten Produkten ist mit einem Tray möglich. Horizontale Schlauchbeutelmaschinen ermöglichen eine produktschonende Verpackung, da das Produkt nicht in den Beutel fällt, sondern horizontal auf einer Zuführvorrichtung zugeführt wird.

Bekannt ist, daß die Mitnehmer (für die zu verpackenden Gegenstände) mit einem Kettenantrieb verbunden sind. Die Mitnehmer schieben die zu verpackenden Gegenstände in die unmittelbare Verpackungsmaschine, das heißt in die Bearbeitungseinheit für das Schweißen.

Stand der Technik ist dabei, daß sich die Antriebskette unterhalb der Mitnehmer befindet. Die zu verpackenden Gegenstände werden liegend auf einer Zuführplatte durch die Mitnehmer in die Verpackungsmaschine geschoben. Damit eine Verbindung zwischen Antriebskette und Mitnehmer hergestellt werden kann muß die Zuführplatte in Längsrichtung eine Nut aufweisen. Die Mitnehmer der Zuführmaschine sind bei herkömmlichen Zuführvorrichtungen in ihrem unteren Bereich mit der Antriebskette verbunden.

Damit nach Zuführung der zu verpackenden Gegenstände in die Verpackungsmaschine am Ende der Zuführplatte die mit der Antriebskette verbundenen Mitnehmer wieder an den Anfang der Zuführplatte gebracht werden, um dort neue zu verpackende Gegenstände in Richtung der Verpackungsmaschine zu schieben, muß ein Schlitz zwischen unmittelbarer Verpackungsmaschine und Zuführvorrichtung vorhanden sein. In diesem Schlitz tauchen die Mitnehmer unter die Zuführplatte ab und werden mit Hilfe der Führungskette unter der Zuführplatte an den Anfang der Zuführplatte transportiert und dort wieder auf die Ebene der Zuführplatte angehoben um die nächsten zu verpackenden Produkte in die unmittelbare Verpackungsmaschine schieben zu können.

Der Schlitz zwischen Zuführvorrichtung und unmittelbarer Verpackungsmaschine muß so groß gestaltet sein, daß es zu einem funktionssicheren Abtauchen der Mitnehmer unter die Zuführplatte kommen kann. Dieser Schlitz zwischen Zuführvorrichtung und unmittelbarer Verpackungsmaschine erweist sich als Quelle von Fehlfunktionen, weil es immer wieder zu einem Verklemmen oder zu einer Beschädigung der zu verpackenden Gegenstände kommt. Da man bestrebt ist die Größe des Schlitzes möglichst klein zu halten passiert es auch teilweise, daß die Mitnehmer in irgendeiner Form stecken- oder hängenbleiben und es dadurch zu Fehlfunktionen kommt.

Die Erfindung hat es sich daher zum Ziel gesetzt eine Zuführvorrichtung für Schlauchbeutelmaschinen zu entwickeln, die den bekannten Nachteil von herkömmlichen Zuführvorrichtungen, nämlich den Schlitz zwischen Zuführvorrichtung und unmittelbarer Verpackungsmaschine nicht aufweist. Ein weiteres Ziel der Erfindung ist es auch die Nut in der Zuführplatte entfallen zu lassen.

Erreicht wird dieses Ziel dadurch, daß die Mitnehmer der Zuführmaschine in ihrem seitlichen Bereich (und nicht in ihrem unteren Bereich) mit der Antriebskette verbunden sind.

Vorteilhaft ist es dabei, daß die mit der Antriebskette verbundenen Mitnehmer in ihrem seitlichen Bereich in einer Nut geführt werden.

Um eine hohe Funktionssicherheit zu gewährleisten und um sicher zu stellen, daß die zu verpackenden Gegenstände ohne Fehlfunktionen der Zuführvorrichtung oder der Verpackungsmaschine in die unmittelbare Verpackungsmaschine geschoben werden, ist es zweckmäßig, daß die, die Mitnehmer führende Nut nach dem Abschluß des Verschiebevorganges der zu verpackenden Gegenstände zur Bearbeitungseinheit für das Schweißen (die unmittelbare Verpackungsmaschine) so ausgestaltet ist, daß die Mitnehmer nach oben hin und in ihrem oberen Bereich nach vorne weggeschwenkt werden.

Um die Zuführvorrichtung für unterschiedliche zu verpackende Produkte einsetzen zu können ist die Verbindung der Mitnehmer mit der Antriebskette vorzugsweise lösbar ausgestaltet.

Nachstehend ist die erfindungsgemäße Zuführvorrichtung für Schlauchbeutelmaschinen in einer Ausführungsform in den Zeichnungen näher dargestellt. Dabei zeigen:
Fig. 1 in Ansicht eine erfindungsgemäße Zuführvorrichtung,
Fig. 2 in einem Aufriß den Bereich der Zuführvorrichtung, wo die zu verpackenden Gegenstände in die unmittelbare Verpackungsmaschine geschoben werden und
Fig. 3 denselben Bereich der Zuführvorrichtung wie in Fig. 2, wobei der Lauf eines Mitnehmers in verschiedenen Phasen des Abhebens von der Zuführplatte gezeigt ist.

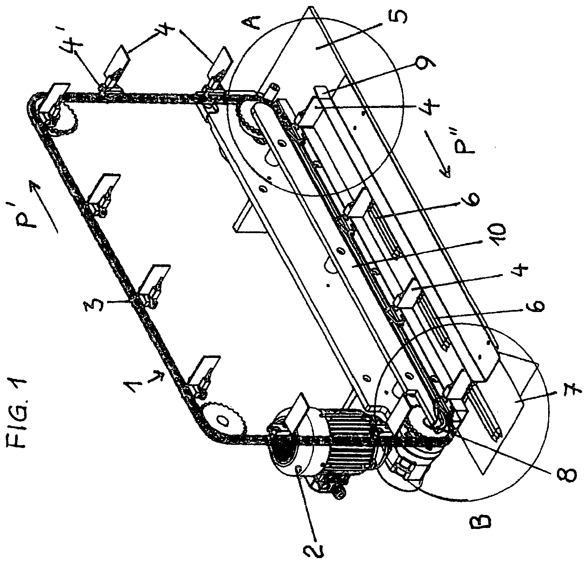

Gemäß der Fig. 1 weist eine Zuführvorrichtung 1 für Schlauchbeutelmaschinen einen herkömmlichen Elektromotor 2 auf. Dieser Elektromotor 2 treibt eine Antriebskette 3 in der Richtung des Pfeiles p' an. Mit der Antriebskette 3 sind Mitnehmer 4 über ein Schnellwechselsystem austauschbar verbunden. Im gezeigten Ausführungsbeispiel sind mit der Antriebskette 3 Halter 4' verbunden. Mit diesen Haltern 4` sind die eigentlichen Mitnehmer 4 leicht lösbar verbunden.

Auf eine Zuführplatte 5 werden in herkömmlicher Art und Weise zu verpackende Gegenstände 6 aufgelegt. Mit Hilfe der Mitnehmer 4 werden die zu verpackenden Gegenstände 6 in Richtung des Pfeiles p" vom Bereich des Beginns des Zuführvorganges (gekennzeichnet als Bereich A) zum anderen Ende der Zuführvorrichtung (gekennzeichnet als Bereich B) verschoben. Im Anschluß an die erfindungsgemäße Zuführvorrichtung 1, das heißt anschließend an den Bereich B befindet sich die nicht gezeigte unmittelbare Verpackungsmaschine. Die zu verpackenden Gegenstände 6 werden im Bereich B in die unmittelbare Verpackungsmaschine geschoben. In der Fig. 1 ist die Verpackungsfolie 7 schematisch gezeigt.

Die Mitnehmer 4 werden in einer Nut 8 geführt.

Die Seitenführung 9 ist verstellbar ausgestaltet, um die Zuführvorrichtung 1 für verschiedene Produktbreiten der zu verpackenden Gegenstände 6 anzupassen.

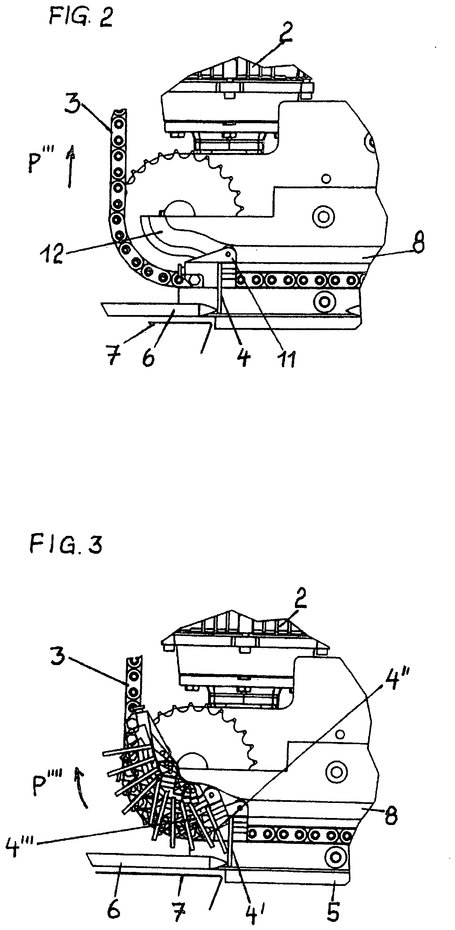

Die Nut 8 verläuft vom Anfangsbereich A der Zuführvorrichtung 1 bis zum Endbereich B horizontal. Dieser horizontale Bereich der Nut 8 ist in der Fig. 1 aufgrund einer Abdeckplatte 10 nicht sichtbar. Im Bereich B der Zuführvorrichtung 1 verläuft die Nut 8 in einer Kurvenscheibe nach oben. Die Details werden in der Fig. 2 gezeigt.

Die Fig. 2 zeigt den Endbereich B der gegenständlichen Zuführvorrichtung 1 in einem Aufriß. Die Mitnehmer 4 sind mit der Antriebskette 3 über ein Schnellwechselsystem austauschbar verbunden. Der Elektromotor 2 bewegt die Antriebskette 3 in Pfeilrichtung p‴. Die Mitnehmer 4 werden mittels eines Führungsorganes 11 in der Nut 8 geführt. Die Nut 8 verläuft über die Länge der Zuführvorrichtung 1 horizontal, bis sie im Bereich B an ihrem Ende mittels einer Kurvenscheibe 12 letztlich vertikal nach oben führt. In der Fig. 2 sind die zu verpackenden Gegenstände 6 bereits über der schematisch gezeichneten Verpackungsfolie 7 geschoben.

Die Kurvenscheibe 12, das heißt die Führungsnut 8 ist so gestaltet, daß die Mitnehmer 4, nach dem Abschluß des Verschiebevorganges der zu verpackenden Gegenstände 6 zur (nicht gezeigten) Bearbeitungseinheit für das Schweißen (die unmittelbare Verpackungsmaschine), nach oben hin und in ihrem oberen Bereich nach vorne weggeschwenkt werden. Die diesbezüglichen Details sind in Fig. 3 zu sehen.

In der Fig. 3 ist, so wie in der Fig. 2, der Bereich B der Zuführvorrichtung 1 zu sehen. Die Mitnehmer 4 sind in mehreren Stadien des Abhebens gezeigt.

Der Mitnehmer 4' zeigt die Endposition des Mitnehmers nach dem Verschiebevorgang. Der zu verpackende Gegenstand 6 ist über die Verpackungsfolie 7 geschoben und kann von der unmittelbaren Verpackungsmaschine weiter behandelt werden. Der Mitnehmer 4" zeigt bereits eine abgehobene Position des Mitnehmers. Die in der Fig. 3 nicht erkennbare Kurvenscheibe 12 steuert das Abheben des Mitnehmers 4, sodaß dieser nach oben hin, von der Zuführplatte 5 aus gesehen, und in seinem oberen Bereich nach vorne weggeschwenkt wird. Der Mitnehmer 4‴ zeigt die nächste Position des Mitnehmers. Der Mitnehmer ist noch weiter nach oben und in seinem oberen Bereich nach vorne weggeschwenkt. Durch diese Bewegung des Mitnehmers werden die zu verpackenden Gegenstände 6 nicht mehr berührt und können von der unmittelbaren Verpackungsmaschine behandelt werden.

In Pfeilrichtung p"" sind die weiteren Positionen des Mitnehmers 4 gezeigt. Am Ende der Kurvenscheibe und damit auch am Ende der Nut 8 wird der Mitnehmer 4 vertikal von der Zuführplatte 5 aus gesehen weggeführt.

Im Rahmen der Erfindung sind verschiedene Abwandlungen möglich. Beispielsweise könnte die Nut 8 im gesamten Bereich der Antriebskette 3 angeordnet sein, sodaß die Mitnehmer 4 in ihrem gesamten Bereich in einer Nut geführt werden.

## Patentansprüche

1. Zuführvorrichtung (1) für Schlauchbeutelmaschine mit einer Mehrzahl von mit einer Antriebskette (3) verbundenen Mitnehmer (4) für die zu verpackenden Gegenstände (6), **dadurch gekennzeichnet, daß** die Mitnehmer (4) in ihrem seitlichen Bereich mit der Antriebskette (3) verbunden sind.

2. Zuführvorrichtung (1) für Schlauchbeutelmaschine nach Anspruch 1, **dadurch gekennzeichnet, daß** die mit der Antriebskette (3) verbundenen Mitnehmer (4) in ihrem seitlichen Bereich in einer Nut (8) geführt werden.

3. Zuführvorrichtung (1) für Schlauchbeutelmaschine nach Ansprüchen 1 und 2, **dadurch gekennzeichnet, daß** die die Mitnehmer (4) führende Nut (8) nach dem Abschluß des Verschiebevorganges der zu verpackenden Gegenstände (6) zur Bearbeitungseinheit für das Schweißen so ausgestaltet ist, daß die Mitnehmer (4) nach oben hin und in ihrem oberen Bereich nach vorne weggeschwenkt werden.

4. Zuführvorrichtung (1) für Schlauchbeutelmaschine nach Anspruch 1, **dadurch gekennzeichnet, daß** die Verbindung der Mitnehmer (4) mit der Antriebskette (3) lösbar ausgestaltet ist.
